**Europäisches Patentamt**

**European Patent Office**

**Office européen des brevets**

(19)

(11) Veröffentlichungsnummer: **0 027 617**
**A1**

## (12) EUROPÄISCHE PATENTANMELDUNG

(21) Anmeldenummer: **80106181.3**

(22) Anmeldetag: **10.10.80**

(51) Int. Cl.³: **G 11 B 27/30**
**//G11B5/09**

(30) Priorität: **19.10.79 DE 2942277**

(43) Veröffentlichungstag der Anmeldung:
**29.04.81 Patentblatt 81/17**

(84) Benannte Vertragsstaaten:
**AT BE CH DE FR GB IT LI LU NL SE**

(71) Anmelder: **GRUNDIG E.M.V. Elektro-Mechanische**
**Versuchsanstalt Max Grundig**
**Kurgartenstrasse 37**
**D-8510 Fürth(DE)**

(72) Erfinder: **Mangold, Hans, Dipl.-Ing.**
**Bussardstrasse 18**
**D-8510 Fürth(DE)**

(74) Vertreter: **Voigt, Günter**
**Kurgartenstrasse 37**
**D-8510 Fürth(DE)**

(54) **Schaltungsanordnung zur zusätzlichen Aufzeichnung von Steuerungsinformationen auf einen Video-Aufzeichnungsträger.**

(57) Es wird ein Verfahren zur zusätzlichen Aufzeichnung von Steuerungsinformationen auf einen Video-Aufzeichnungsträger beschrieben, bei dem ein Vormagnetisierungsimpuls wählbarer Breite mit Hilfe eines über die gesamte Bandbreite reichenden Magnetkopfes (26) als Markenimpuls auf dem Aufzeichnungsträger aufgezeichnet und anschließend mit der Video- bzw. Audio-Information überschrieben wird. Vorteilhafterweise wird der Markenimpuls mit Hilfe des Gesamtlöschkopfes aufgezeichnet. Die Schaltungsanordnung zur Durchführung des Verfahrens ist so gestaltet, daß bei Aufnahmefunktion für Video- und Audio-Signale über eine erst Diode (12) eine erster Eingang (13) eines Mono-Flops (14) auf "low" gesetzt und über einen nachfolgenden Start-Impuls über eine zweite Diode (15) und einen zweiten Eingang (16) des Mono-Flops (14) dasselbe initialisiert, über Transistorverstärker (22,23) der Markenimpuls verstärkt und so der Löschkopf (26) von einem Gleichstrom durchflossen wird.

./...

# VERFAHREN UND SCHALTUNGSANORDNUNG ZUR ZUSÄTZLICHEN AUFZEICHNUNG VON STEUERUNGSINFORMATIONEN AUF EINEN VIDEO-AUFZEICHNUNGSTRÄGER

## Beschreibung

Die Erfindung bezieht sich auf ein Verfahren zur zusätzlichen Aufzeichnung von Steuerungsinformationen auf einen Video-Aufzeichnungsträger sowie auf eine Schaltungsanordnung zur Durchführung des Verfahrens.

Es sind bereits Video-Aufzeichnungsgeräte mit einer Merkspur (Cuespur) bekannt, bei denen zusätzliche Informationen aufgezeichnet und zu gegebener Zeit abgefragt werden können. Die Abfrage kann teilweise auch im schnellen Vorlauf sowie im Rücklauf geschehen.

Weiter ist es bekannt, im Videosignal - vorzugsweise in der Vertikalaustastlücke - Informationen unterzubringen. In einem solchen Fall ist auch bei Bandstillstand eine Wiedergabe möglich.

Die erwähnten Verfahren arbeiten mit codierten Digitalsignalen, die bei Wiedergabe über Schieberegister auf die ursprüngliche Taktgeschwindigkeit zurückgeführt werden.

Bei der Audio-Aufzeichnung ist es auch bekannt, eine zusätzliche Information in Form kurzer Auftastung bestimmter Frequenzen auf eine Zusatzspur oder auch gemeinsam mit dem Audiosignal aufzuzeichnen.

Schließlich ist es auch bekannt, eine umschaltbare Verschiebung des FM-Hubbreiches als Steuerungsmarke auszunutzen. Dieses Verfahren wird bei Schrägspur-Videorecordern verwendet, da die Relativgeschwindigkeit nur geringfügig von der Bandbewegung abhängig ist.

Der Aufwand für die bekannten Verfahren ist jedoch recht beträchtlich.

Der Erfindung liegt die Aufgabe zugrunde, den bei den bekannten Verfahren notwendigen Aufwand zu verringern.

Die Lösung dieser Aufgabe erfolgt erfindungsgemäß mit Hilfe der im kennzeichnenden Teil der Ansprüche 1 bzw. 3 angegebenen Maßnahmen.

Vorteilhafte Weiterbildungen ergeben sich aus den Ansprüchen 2 und 4 bis 7.

Die Erfindung wird nachfolgend unter Bezugnahme auf die Zeichnungsfigur beispielsweise erläutert.

Bei Eingabe der Aufnahmefunktion wird am Kontaktpunkt 10 der Signalpegel von H auf L gesetzt. Über eine erste Diode 12 gelangt dieses Signal an einen ersten Eingang 13 eines Mono-Flop 14. Durch den nachfolgenden Startimpuls, d. h. durch den Wechsel am Kontaktpunkt 11 wird über eine zweite Diode 15 ein zweiter Eingang 16 des Mono-Flop 14 initialisiert, nachdem die UND-Bedingung zwischen der zweiten Diode 15 und einer dazu parallelliegenden Diode 17 erfüllt war, deren Anode mit dem Kontaktpunkt 10 verbunden ist.

Die Dauer der Marke am Ausgang 18 des Mono-Flops 14 wird durch die Werte eines Widerstandes 19 sowie einer Kapazität 20 bestimmt, wobei die Kapazität einerseits mit Masse und andererseits mit einem weiteren Ausgang 21 des Monoflops 14 sowie mit dem Widerstand 19 verbunden ist, dessen anderer Anschluß über einen Widerstand 40 geeigneter Größe mit dem Kontaktpunkt 11 in Verbindung steht.

Über Transistoren 22 und 23 wird der am Ausgang 18 des Mono-Flops 14 anstehende Impuls verstärkt und über eine weitere Diode 24 und einen Widerstand 25 dem Löschkopf 26 zugeführt.

Der oben beschriebene Funktionsablauf gilt für den Fall, daß ein Anfangsimpuls mit Hilfe des Löschkopfes 26 auf den Auf-

zeichnungsträger aufgeschrieben werden soll. Es besteht aber teilweise auch der Wunsch, unter Beibehaltung der Aufnahme- funktion des Aufzeichnungsgerätes einen Zwischenimpuls zu setzen. Beispielsweise dann, wenn von der Aufzeichnung eines ersten Fernsehprogramms auf die Aufzeichnung eines anderen Fernsehprogramms umgeschaltet werden soll. Wegen des Zwischenimpulses ist der Programmwechsel dann bei der Wiedergabe mit Sicherheit zu erkennen.

Um dies zu erreichen, wird ein Kontaktpunkt 27 mit einem negativen Impuls beaufschlagt, mit dessen Hilfe ein dritter Transistor 28 kurzzeitig gesperrt wird, dessen Emitter mit Masse und dessen Kollektor über eine vierte Diode 29 mit dem zweiten Eingang 16 des Mono-Flops 14 verbunden ist. Der Kollektor des dritten Transistors 28 ist über einen Widerstand 30 mit einer Kapazität 31 verbunden, die einerseits an Masse liegt und andererseits mit der Anode einer fünften Diode 32 in Verbindung steht. Die Kathode dieser Diode 32 ist mit dem ersten Eingang 13 des Mono-Flops 14 verbunden. Der über den Wider- stand 30 und die Kapazität 31 verzögerte Impuls wird über die vierte Diode 29 am zweiten Eingang 16 des Mono-Flops 14 wirksam, nachdem die UND-Bedingung für die erste Diode 12 und die fünfte Diode 32 zuvor erfüllt war.

Bei Ende der Aufnahme wird über die zweite Diode 15 der zweite Eingang 16 des Mono-Flops 14 vorbereitet und über die erste Diode 12 der erste Eingang des Mono-Flops 14 initialisiert.

In der Wiedergabefunktion wird beim Lesen der über den Löschkopf 26 auf den Aufzeichnungsträger aufgezeichneten Marken der Gleichfeldsprung als Nadelimpuls erfaßt und in einem Differenzverstärker 33 verstärkt. Der Gesamtlöschkopf 26 ist über einen Kondensator 34 und einen Widerstand 35 mit dem positiven Eingang des Differenzverstärkers 33 verbunden, wobei dieser Eingang seinerseits über eine Antiparallelschaltung zweier Dioden 36 und 37 sowie über eine Kapazität 38 mit Masse verbunden ist. Der Verbindungspunkt zwischen der Antiparallelschaltung der Dioden 36 und 37 einerseits sowie der Kapazität 38 andererseits ist über einen Widerstand 39 und den Widerstand 40 mit dem Kontaktpunkt 11 verbunden. Über den Widerstand 35, die Antiparallelschaltung aus den Dioden 36 und 37 in Verbindung mit der Kapazität 38 und dem Widerstand 39 werden während des Löschvorganges größere Wechselspannungswerte unterdrückt.

Der nur bei Wiedergabe eingeschaltete zweite Verstärker 41 erhält über eine Mittenzuführung zweier in Serie liegender Dioden 42 und 43 vom Ausgang des ersten Verstärkers 33 an den Endpunkten der Serienschaltung sowohl positive als auch negative Impulse, liefert an seinem Ausgang jedoch stets negative Impulse. Der Ausgang des zweiten Verstärkers 41 ist mit einem ersten Eingang 44 eines zweiten Mono-Flops 45 verbunden, das die Impulse auf eine für die Steuerfunktionen notwendige Zeitdauer verlängert und über eine in Gegenrichtung gepolte Diode 46 am Kontaktpunkt 47 einen Stop-Impuls liefert.

Mit dem oben geschilderten Verfahren bzw. mit der oben geschilderten Schaltungsanordnung können am Ende einer Aufnahme sowie zu Beginn einer neuen Aufnahme durch den Gesamtlöschkopf mit einem Gleichspannungsimpuls bzw. unter Verwendung der induktiven Ladungsquantität des aktiven Löschschwingkreises Markenimpulse hinreichend großer wählbarer Breite gesetzt werden, durch die eine Vormagnetisierung des Aufzeichnungsträgers über die gesamte Bandbreite erfolgt. Wie beschrieben, können solche Impulse auch zur Trennung der Aufnahme eines Programms von der Aufnahme des anderen Programms verwendet werden.

Die nachfolgenden Video- und Audio-Köpfe beschreiben anschließend das vormagnetisierte Stück des Aufzeichnungsträgers in üblicher Weise, so daß keine Information verloren geht. Durch die vorgegebene Spaltbreite des Gesamtlöschkopfes sowie durch die Richtungsorientierung von Aufzeichnungsköpfen einerseits sowie Löschkopf andererseits wird ein ausreichender Störabstand erreicht.

Bei der Wiedergabe bzw. beim Umspulen im Suchlauf werden der Beginn und das Ende des vormagnetisierten Bereichs vom Löschkopf als Impuls gelesen und nach Verstärkung und Verbreiterung auf die für die Steuerschaltung notwendige Breite als Stop-Impuls ausgewertet.

Die der Steuerung dienenden Marken auf dem Aufzeichnungsträger können auch im schnellen Vorlauf, d. h. im ausgefädelten Zustand, gelesen werden. Hierzu ist dann jedoch ein zusätzlicher Lesekopf erforderlich.

VERFAHREN UND SCHALTUNGSANORDNUNG ZUR ZUSÄTZLICHEN
AUFZEICHNUNG VON STEUERUNGSINFORMATIONEN AUF EINEN
VIDEO-AUFZEICHNUNGSTRÄGER

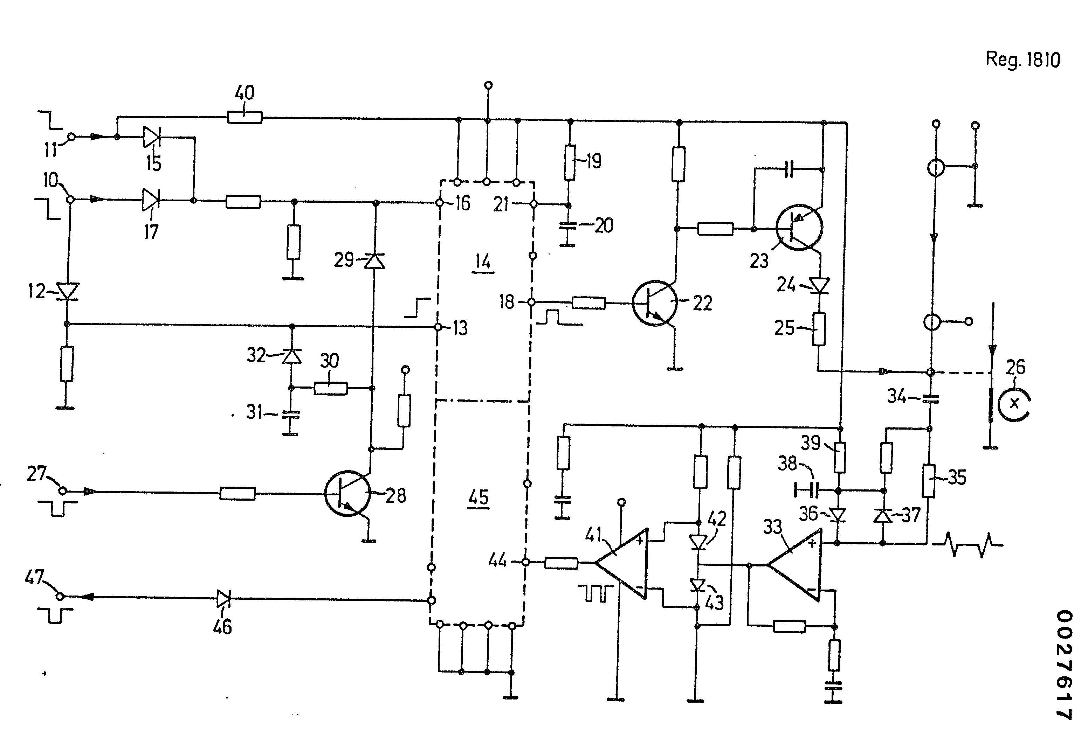

Patentansprüche

1. Verfahren zur zusätzlichen Aufzeichnung von Steuerungs-informationen auf einen Video-Aufzeichnungsträger, dadurch gekennzeichnet, daß ein Vormagnetisierungsimpuls wählbarer Breite mit Hilfe eines über die gesamte Bandbreite reichenden Magnetkopfes (26) als Markenimpuls auf dem Aufzeichnungsträger aufgezeichnet und anschließend mit der Video- bzw. Audio-Information überschrieben wird.

2. Verfahren nach Anspruch 1, dadurch ge-kennzeichnet, daß der Markenimpuls mit Hilfe des Gesamtlöschkopfes aufgezeichnet wird.

3. Schaltungsanordnung zur Durchführung des Verfahrens nach Anspruch 1 oder 2, dadurch gekenn-zeichnet, daß bei Aufnahmefunktion für Video- und

Audiosignale über eine erste Diode (12) ein erster Eingang (13) eines Mono-Flops (14) auf "low" gesetzt und über einen nachfolgenden Start-Impuls über eine zweite Diode (15) und einen zweiten Eingang (16) des Mono-Flops (14) dasselbe initialisiert, über Transistorverstärker (22, 23) der Markenimpuls verstärkt und so der Löschkopf (26) von einem Gleichstrom durchflossen wird.

4. Schaltungsanordnung nach Anspruch 3 zur Abgabe eines Markenimpulses während der Aufnahmefunktion zur Kennzeichnung eines während der Aufnahmefunktion erfolgenden Programmwechsels, d a d u r c h   g e k e n n z e i c h n e t ,   daß der zweite Eingang (16) des Mono-Flops (14) über einen kurzzeitig sperrenden dritten Transistor (28) und eine dritte Diode (29) hochgesetzt wird.

5. Schaltungsanordnung nach Anspruch 3 oder 4 zur Abgabe eines Markenimpulses bei Ende der Aufnahme, d a d u r c h   g e k e n n z e i c h n e t ,   daß der zweite Eingang (16) des Mono-Flops (14) über die zweite Diode (15) vorbereitet und über die erste Diode (12) der erste Eingang (13) des Mono-Flops (14) initialisiert wird.

6. Schaltungsanordnung nach einem der Ansprüche 3 bis 5 zur Wiedergabe der vom Gesamtlöschkopf aufgenommenen Vormagnetisierungsimpulse, d a d u r c h   g e k e n n z e i c h -

n e t , daß der auf dem Aufzeichnungsträger enthaltene Impuls gelesen, verstärkt und für die von ihm auszulösenden Steuerfunktionen in einem zweiten Mono-Flop (45) zeitlich verbreitert wird.

7. Schaltungsanordnung nach Anspruch 6, d a d u r c h g e k e n n z e i c h n e t , daß eine aus einem Widerstand (35) und zwei nachgeschalteten antiparallelen Dioden (36, 37) bestehende Zusatzschaltung zur Unterdrückung größerer Wechselspannungswerte während des Löschvorganges vorhanden ist.

Reg. 1810

0027617

| Europäisches Patentamt | **EUROPÄISCHER RECHERCHENBERICHT** | Nummer der Anmeldung |
|---|---|---|
| | | EP 80 10 6181 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl.³) |
|---|---|---|---|
| X | <u>US - A - 3 665 118</u> (COOPER JR.)<br>  * Spalte 3, Zeile 16 bis Spalte 4, Zeile 57; Figur 1 *<br><br>-- | 1 | G 11 B 27/30//<br>G 11 B  5/09 |
| | IBM TECHNICAL DISCLOSURE BULLETIN, Band 14, Nr. 8, Januar 1972, New York, US,<br>C.B. FLIPPEN JR.: "Skewed erase gap for block beginning", Seite 2436<br>  * Das ganze Dokument *<br><br>-- | 2,6 | |
| | <u>US - A - 2 864 895</u> (E.H. BRYANT JR.)<br>  * Spalte 2, Zeilen 24-34; Spalte 9, Zeile 73 bis Spalte 10, Zeile 18; Spalte 10, Zeile 65 bis Spalte 11, Zeile 50 *<br><br>-- | 2,6 | RECHERCHIERTE SACHGEBIETE (Int. Cl.³)<br><br>G 11 B 5<br>G 11 B 27 |
| | <u>US - A - 4 167 028</u> (R. TOBEY)<br>  * Spalte 1, Zeile 55 bis Spalte 2, Zeile 25; Spalte 2, Zeile 50 bis Spalte 3, Zeile 32; Figur 1 *<br><br>-- | 3,6 | |
| | <u>GB - A - 842 336</u> (MINNEAPOLIS-HONEYWELL REGULATOR COMP.)<br>  * Seite 3, Zeile 22 bis Seite 4, Zeile 130; Seite 5, Zeile 86 bis Seite 7, Zeile 13; Figuren 3,4 *<br><br>-- | 1,6 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | SMPTE JOURNAL, Band 87, Nr. 8, | 7 | &: Mitglied der gleichen Patentfamilie, übereinstimmendes Dokument |

∘/∘

Der vorliegende Recherchenbericht wurde für alle Patentansprüche erstellt.

| Recherchenort | Abschlußdatum der Recherche | Prüfer |
|---|---|---|
| Den Haag | 25-01-1981 | DAALMANS |

EPA form 1503.1   06.78

| Europäisches Patentamt | EUROPÄISCHER RECHERCHENBERICHT |

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| | August 1978, Scarsdale, US, G.R. SWETLAND: "Applying the SMPTE time and control code to television audio post production", Seiten 508-512 <br><br> * Seite 509, linke Spalte, Zeilen 14-52; Figur 5 * <br><br> -- | |
| A | US - A - 3 209 340 (PINGRY III) <br><br> * Spalte 4, Zeile 1 bis Spalte 5, Zeile 33; Figur 4 * <br><br> & DE - A - 1 424 510 <br><br> -- | 6 |
| A | US - A - 2 802 060 (COCO) <br><br> * Spalte 1, Zeilen 54-72; Spalte 2, Zeilen 18-33 * <br><br> -- | 1,4,5 |
| A | FR - A - 2 409 555 (SONY CORP.) <br><br> * Seite 2, Zeilen 16-23; Seite 3, Zeile 17 bis Seite 5, Zeile 12; Figur 1 * <br><br> & DE - A - 2 849 983 <br><br> -- | 1,4 |
| A | DE - A - 2 615 187 (VOCKENHUBER et al.) <br><br> * Seite 1, Zeile 1 bis Seite 3, Zeile 14; Seite 6, Zeile 9 bis Seite 8, Zeile 4 * <br><br> ----- | 1,5 |

**KLASSIFIKATION DER ANMELDUNG (Int. Cl.³)**

**RECHERCHIERTE SACHGEBIETE (Int. Cl.³)**